(19) Europäisches Patentamt
European Patent Office
Office européen des brevets

(11) **EP 2 726 814 B1**

(12) **FASCICULE DE BREVET EUROPEEN**

(45) Date de publication et mention de la délivrance du brevet:
**30.03.2016 Bulletin 2016/13**

(51) Int Cl.:
***G01B 11/06*** *(2006.01)*   ***B29C 49/78*** *(2006.01)*
***G01N 21/90*** *(2006.01)*

(21) Numéro de dépôt: **12730949.0**

(22) Date de dépôt: **28.06.2012**

(86) Numéro de dépôt international:
**PCT/EP2012/062534**

(87) Numéro de publication internationale:
**WO 2013/000988 (03.01.2013 Gazette 2013/01)**

(54) **PROCÉDÉ DE MESURE DE L'ÉPAISSEUR D'UNE PAROI TRANSPARENTE D'UN RÉCIPIENT PAR INTERFÉROMÉTRIE ET DISPOSITIF POUR LA MISE EN OEUVRE DU PROCÉDÉ**

VERFAHREN ZUR MESSUNG DER DICKE EINER TRANSPARENTEN WAND EINES BEHÄLTERS MITTELS INTERFEROMETRIE UND VORRICHTUNG ZUR DURCHFÜHRUNG DES VERFAHRENS

METHOD FOR MEASURING THE THICKNESS OF A TRANSPARENT WALL OF A CONTAINER BY INTERFEROMETRY AND DEVICE FOR IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2011 FR 1155821**

(43) Date de publication de la demande:
**07.05.2014 Bulletin 2014/19**

(73) Titulaire: **Sidel Participations**
**76930 Octeville Sur Mer (FR)**

(72) Inventeur: **PLANTAMURA, Bernard**
**F-76930 Octeville sur Mer (FR)**

(74) Mandataire: **Siloret, Patrick**
**Sidel Blowing & Services**
**Avenue de la Patrouille de France**
**76930 Octeville-sur-Mer (FR)**

(56) Documents cités:
**WO-A1-2010/037452    DE-A1-102007 046 387**
**FR-A1- 2 803 027    FR-A1- 2 898 971**
**US-A- 5 657 124    US-A1- 2008 197 542**

**Description**

L'invention concerne un procédé de mesure de l'épaisseur de la paroi transparente d'un récipient en matériau thermoplastique, le récipient étant réalisé par soufflage d'une préforme chaude.

Il est connu de fabriquer les récipients en matériau thermoplastique, par exemple des bouteilles, par soufflage de préformes préalablement chauffées. Les installations de fabrication de tels récipients comportent ainsi un four de préchauffage, et un poste de soufflage qui transforme les préformes en récipients finaux.

Pour permettre une production en grande série de récipients, les préformes, puis les récipients finaux, sont transportés à vitesse élevée d'un poste à l'autre.

Après l'opération de soufflage, il est préférable de réaliser une mesure de l'épaisseur de la paroi des récipients finaux afin de vérifier la conformité des récipients avec un cahier des charges.

Pour éviter de ralentir la production des récipients, il est connu de réaliser cette mesure par de moyens sans contact, lors du transfert du récipient entre le poste de soufflage et le poste suivant, par exemple un poste de remplissage du récipient.

Une mesure sans contact de l'épaisseur d'une paroi transparente d'un récipient en matériau thermoplastique est décrite dans le brevet DE 10 2007 046 387 A1. Le brevet FR 2 898 971 décrit une mesure de l'épaisseur d'une paroi avec grande précision et rapidité utilisant l'interférométrie spectroscopique.

Le document WO-A-2009/036715 propose par exemple de réaliser la mesure au moyen d'un capteur confocal. Un tel capteur émet un rayon lumineux à spectre continu qui passe à travers une lentille chromatique. Ce procédé est particulièrement efficace lorsque le spectre du rayon lumineux est compris dans le domaine du visible, c'est-à-dire qu'il s'étend dans une plage de longueurs d'ondes comprise entre 0,4 $\mu$m et 0,7 $\mu$m. La lentille chromatique décompose le rayon lumineux de manière à focaliser chaque longueur d'onde dans un plan différent. Ainsi, chaque longueur d'onde est focalisée à une distance axiale déterminée depuis la lentille. Le rayon ainsi décomposé traverse la paroi du récipient selon un axe perpendiculaire. Les deux faces de la paroi du récipient réfléchissent avec un pic d'intensité deux longueurs d'ondes déterminées qui sont focalisées sur chacune d'elle. Les rayons lumineux réfléchis ne présentent donc sensiblement pas un spectre continu. En fonction des longueurs d'onde réfléchies et de l'indice de réfraction du matériau, il est possible de calculer la position de chaque face de la paroi par rapport au capteur, et d'en déduire l'épaisseur de la paroi.

Néanmoins, ce procédé présente l'inconvénient de nécessiter un positionnement axial extrêmement précis du récipient par rapport à la lentille. Pour avoir une mesure de précision suffisante sur des parois de faible épaisseur, par exemple entre 0,1 et 0,3 mm d'épaisseur, la longueur axiale de la plage de mesure est en effet inférieure à 3 mm. Une plage plus large affecterait la précision de la mesure, voire ne permettrait pas la détection de parois fines. Or, la position de la paroi est susceptible de varier en fonction de la forme du récipient ou encore de la vitesse de défilement du récipient lorsque ce dernier est porté à la périphérie d'un carrousel.

Par ailleurs, pour certaines séries, la paroi des récipients est réalisée en un matériau thermoplastique transparent teint. La couleur du matériau influe très sensiblement sur l'intensité du rayon réfléchi par la deuxième face la plus éloignée du capteur. Le matériau teint absorbe en effet certaines longueurs d'onde du rayon lumineux. Or lorsque l'intensité du rayon réfléchi est insuffisante, le capteur n'est plus capable de détecter de manière suffisamment précise l'un des deux pics d'intensité. Cela se traduit par une mesure erronée voire impossible.

De plus, la teinte du matériau réduit aussi la plage de distance sur laquelle la détection est possible. En cas de mesure d'épaisseur de la paroi de récipients réalisés en matériau plastique transparent teint, le positionnement précis de la paroi du récipient par rapport au capteur est susceptible de devenir problématique.

Pour résoudre ces problèmes, l'invention propose un procédé selon la revendication 1. D'autres caractéristiques du procédé sont définies dans les revendications dépendantes.

D'autres caractéristiques et avantages apparaîtront à la lecture de la description détaillée qui va suivre pour la compréhension de laquelle on se reportera aux dessins annexés parmi lesquels :

- la figure 1 est une vue de dessus qui représente une roue de transfert de récipients ;
- la figure 2 est une vue en section selon le plan de coupe 2-2 de la figure 1 qui représente un récipient porté par la roue de transfert lorsqu'il passe devant un capteur interférométrique ;
- la figure 3 est une vue de détail à plus grande échelle de la figure 2 qui représente la paroi du récipient ainsi que les ondes réfléchies et la superposition desdites ondes réfléchies ;
- la figure 3a est une vue similaire à celle de la figure 3 qui représente uniquement une première longueur d'onde des rayons lumineux réfléchis ;
- la figure 3b est une vue similaire à celle de la figure 3 qui représente uniquement une deuxième longueur d'onde des rayons lumineux réfléchis ;
- la figure 4 est une courbe qui représente l'intensité de la superposition des rayons lumineux réfléchis en fonction de la fréquence de l'onde lumineuse ;
- la figure 5 est une courbe qui représente la transformée de Fourier de la courbe de la figure 4.

Dans la suite de la description, on adoptera à titre non limitatif des orientations longitudinales "L", verticales "V" et transversales "T" qui sont indiquées par le trièdre "L,V,T" des figures.

Dans la suite de la description, des éléments présentant des fonctions similaires, analogues ou identiques seront désignés par des mêmes numéros de référence.

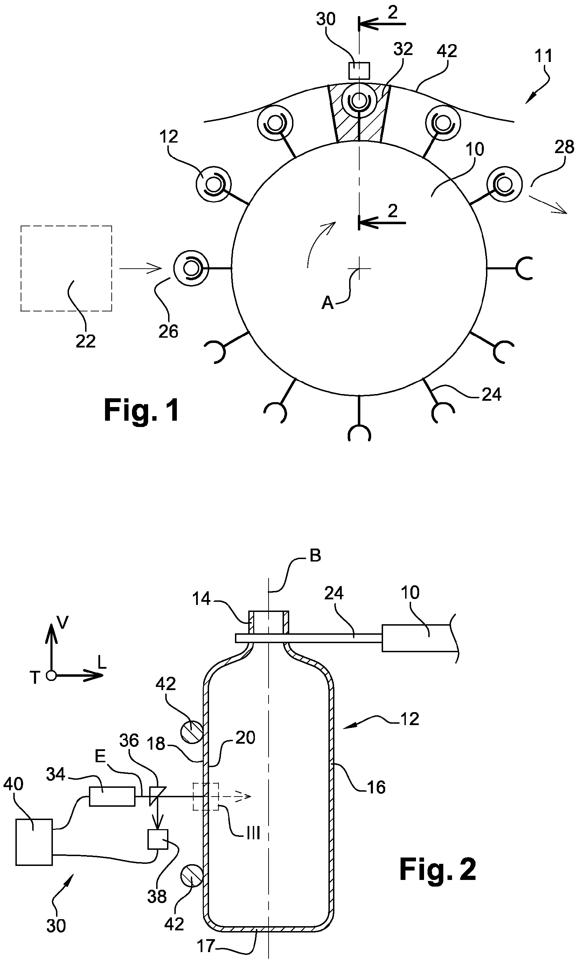

On a représenté à la figure 1 un dispositif 11 de transfert comportant une roue 10 de transfert de récipients 12. Cette roue 10 de transfert est agencée dans une installation (non représentée) de production de récipients 12 en matériau thermoplastique.

Comme représenté à la figure 2, les récipients 12 en matériau thermoplastique concernés par l'invention présentent un corps qui débouche vers le haut par l'intermédiaire d'un col 14. Le corps comporte une paroi 16 latérale transparente qui délimite un volume intérieur. Le récipient 12 est fermé verticalement vers le bas par un fond 17.

La paroi 16 est délimitée par une face 18 externe qui est tournée vers l'extérieur du récipient 12 et par une face 20 interne qui est tournée vers le volume intérieur.

Le récipient 12 est ici réalisé en un matériau transparent teint, par exemple teint dans la masse par adjonction d'un colorant. Par matériau "teint", on comprendra que la paroi 16 du récipient 12 est susceptible de laisser passer seulement moins de 70% d'un rayonnement lumineux à spectre continu dans le domaine du visible. De préférence, la paroi 16 du récipient 12 est susceptible de laisser passer seulement moins de 20% d'un rayonnement lumineux à spectre continu dans le domaine du visible. Le matériau présente par exemple une teinte ambrée, verte ou bleue. Selon la teinte du matériau, l'intensité de certaines longueurs d'ondes du domaine visible sera particulièrement atténuée, le matériau faisant office de filtre pour ces longueurs d'onde.

Une telle installation comporte généralement un four (non représenté) à l'intérieur duquel des préformes en matériau thermoplastique défilent afin d'être chauffées à une température adaptée à leur soufflage.

L'installation comporte aussi un poste 22 de soufflage, représenté schématiquement à la figure 1, qui est équipé de moules (non représentés) dans lesquels les préformes ainsi chauffées sont reçues. Les préformes sont destinées à être formées en un récipient 12 final par soufflage. Les moules présentent une empreinte qui est complémentaire de la forme finale des récipients 12. De manière connue les moules peuvent être remplacés par d'autres moules afin de réaliser des récipients 12 de formes différentes sur ladite installation.

La roue 10 de transfert est ici agencée à la sortie du poste 22 de soufflage de manière à transférer les récipients 12 finaux vers le poste suivant, par exemple un poste (non représenté) de remplissage des récipients 12.

La roue 10 de transfert est montée rotative par rapport au sol autour d'un axe "A" vertical. Elle est équipée à sa périphérie de moyens 24 de préhension individuels de récipient 12. Les moyens 24 de préhension sont aptes à porter les récipients 12 par leur col 14 supérieur. Les moyens 24 de préhension sont ici formés par des pinces qui sont aptes à saisir le col du récipient 12

Selon une variante non représentée de l'invention, les moyens de préhension sont formés par des encoches réalisées dans le bord périphérique de la roue. Les encoches sont aptes à recevoir le col du récipient.

Chaque récipient 12 est ainsi porté de manière que son axe principal "B" soit vertical. Les récipients 12 sont transportés le long d'une trajectoire sensiblement en arc de cercle depuis un point 26 de chargement jusqu'à un point 28 de déchargement, par rotation de la roue 10 de transfert dans un sens horaire en référence à la figure 1. La roue 10 de transfert tourne de manière que les récipients 12 se déplacent à une vitesse qui est par exemple comprise entre 4 m/s et 6 m/s selon la position des moyens 24 de préhension, la cadence et le type de machine.

Le dispositif 11 de transfert est muni de moyens 30 de mesure interférométrique qui sont agencés de manière fixe par rapport au sol. Les moyens 30 de mesure permettent de mesurer l'épaisseur "s" d'une paroi 16 d'un récipient 12 lors de son passage dans une zone 32 de mesure qui est interposée sur la trajectoire des récipients 12. Par la suite, en se référant à la figure 2, la largeur longitudinale de la zone de mesure sera désignée par le terme "plage de mesure".

La zone 32 de mesure est ici interposée radialement entre les moyens 30 de mesure et l'axe de rotation de la roue 10 de transfert.

Selon une variante non représentée de l'invention, les moyens de mesure sont agencés transversalement entre l'axe de rotation de la roue de transfert et la zone de mesure.

Lorsque les récipients 12 se déplacent le long de leur trajectoire avec une vitesse variable, par exemple du fait de la présence de cames (non représentées), la zone 32 de mesure est agencée à l'endroit auquel les récipients 12 présentent une vitesse minimale.

Comme cela est illustré à la figure 2, les moyens 30 de mesure comportent une source 34 d'émission d'un rayon "E" lumineux de spectre continu sur une plage déterminée de longueurs d'onde. Par "spectre lumineux continu", on comprendra que l'intensité lumineuse est sensiblement identique sur toute la plage de longueurs d'onde.

Le rayon "E" lumineux est émis selon un axe "C" longitudinal qui est perpendiculaire à la paroi 16 du récipient 12 présent dans la zone 32 de mesure. Le rayon "E" lumineux est ainsi susceptible de traverser perpendiculairement la paroi 16 transparente du récipient 12.

Le rayon "E" lumineux est plus particulièrement émis selon un axe "C" qui est perpendiculaire à une tangente à la trajectoire du récipient 12 dans la zone 32 de mesure.

Le rayon "E" lumineux émis présente un spectre continu de longueurs d'onde sur une plage s'étendant de part et d'autre d'une longueur d'onde centrale. La borne minimale de ladite plage est par exemple égale à la longueur d'onde centrale moins 5% de la longueur d'onde centrale, tandis que la borne maximale de ladite plage est par exemple égale à la longueur d'onde centrale plus 5% de la longueur d'onde centrale.

La longueur d'onde centrale est par exemple comprise entre 0,45 $\mu$m et 2 $\mu$m. Lorsque le récipient 12 est réalisé en un matériau teint, comme défini précédemment, la longueur d'onde centrale est comprise dans le domaine de l'infrarouge entre 0,75 $\mu$m et 1,6 $\mu$m. On a en effet constaté que, de manière surprenante, les résultats des mesures sur des récipients teints étaient bien plus précis et plus fiable lorsque le rayon "E" lumineux est émis dans un spectre compris dans l'infrarouge. En effet, en deçà de cette plage, la partie visible du rayonnement est fortement absorbée par le matériau teint, tandis qu'au delà de cette plage, on a constaté que les matériaux thermoplastiques, teints ou incolores, absorbent aussi considérablement le rayonnement lumineux.

Le rayon "E" lumineux émis présente ici un spectre continu de longueurs d'onde qui s'étendent sur une plage de 0,81 $\mu$m jusqu'à 0,89 $\mu$m.

Selon une variante non représentée de l'invention, le rayon "E" lumineux émis présente un spectre continu de longueurs d'onde qui s'étendent sur une plage de 1,25 $\mu$m jusqu'à 1,35 $\mu$m.

Le récipient 12 étant réalisé en un matériau transparent ou semi-transparent dans le spectre du rayon "E" lumineux émis, le rayon "E" lumineux émis traverse la paroi 16 du récipient 12.

Lorsque le rayon "E" lumineux émis traverse la face 18 externe de la paroi 16 du récipient 12, une première partie du rayon "E" lumineux est réfléchie par la face 18 externe. Un premier rayon "R1" réfléchi de spectre continu se propage ainsi dans l'axe "C" du rayon "E" lumineux émis mais dans un sens inverse. Le rayon "E" lumineux perd ainsi en intensité "I". Le spectre du premier rayon "R1" réfléchi est sensiblement identique au spectre du rayon "E" lumineux émis, seule l'intensité "I" du rayon "R1" lumineux réfléchi est inférieure à celle du rayon "E" lumineux émis.

La partie transmise du rayon "E" lumineux émis continu de se propager selon l'axe "C" à l'intérieur de la paroi 16 du récipient 12 jusqu'à atteindre la face 20 interne de la paroi 16. Une autre partie du rayon "E" lumineux émis est réfléchie par la face 20 interne. Un deuxième rayon "R2 réfléchi de spectre continu se propage ainsi dans l'axe "C" du rayon "E" lumineux émis, mais dans un sens inverse. Le deuxième rayon "R2" réfléchi présente des propriétés spectrales analogues à celles du premier rayon "R1" lumineux réfléchi.

Les deux rayons "R1, R2" réfléchis superposés sont orientés par un prisme 36 ou par tout autre moyen adapté en direction d'un capteur 38 interférométrique.

Le terme "transparent" englobe dans la description et dans les revendication des récipients 12 dont la paroi, incolore ou teinte, est suffisamment transparente pour le spectre lumineux du rayon "E" lumineux émis, afin que le deuxième rayon "R2" lumineux réfléchi soit d'intensité suffisante pour pouvoir interférer avec le premier rayon "R1" lumineux réfléchi en émergeant de la paroi 16.

L'avantage du capteur interférométrique travaillant dans le proche infrarouge est qu'il est beaucoup moins sensible aux pigments colorants ajoutés au matériau thermoplastique, tel que du PET, pour donner la teinte souhaitée au récipient final. Il permet donc une détection plus fiable et dans une gamme plus étendue d'épaisseurs et de couleurs, et d'intensité de coloration.

Le capteur 38 interférométrique et la source 34 lumineuse communiquent tous les deux avec une unité électronique de commande 40.

Selon un mode de réalisation non représenté de l'invention, le dispositif de transfert est équipé de plusieurs moyens de mesures qui sont agencés à des hauteurs différentes de manière à mesurer l'épaisseur "s" de la paroi du récipient à différentes hauteurs. Les moyens de mesures sont avantageusement agencés dans un même alignement vertical, ou ils sont décalés selon l'encombrement du capteur et la distance entre les zones à mesurer, afin de réaliser simultanément toutes les mesures dans une seule zone de mesure.

Selon encore un autre mode de réalisation non représenté de l'invention, le dispositif de transfert comporte au moins deux moyens de mesure qui sont agencés longitudinalement de part et d'autre de la zone de mesure de manière à contrôler l'épaisseur "s" de la paroi du récipient en deux points opposés.

Lorsque la roue 10 de transfert tourne très vite, le corps des récipients 12 est soumis à une force centrifuge qui est susceptible de provoquer l'inclinaison des récipients 12 vers l'extérieur autour de leur col.

Pour maintenir la paroi 16 des récipients 12 orthogonale par rapport à l'axe "C" du rayon "E" lumineux émis, et/ou pour éviter que la paroi 16 des récipients ne sorte de la plage de mesure des capteurs 38 interférométrique, le dispositif 11 de transfert est avantageusement équipée d'un rail 42 horizontal fixe par rapport au sol qui s'étend en arc de cercle autour de la roue 10. Ainsi, le rail 42 est agencé radialement, par rapport à l'axe de rotation A de la roue 10, en vis-à-vis de la zone 32 de mesure. Le rail 42 est agencé extérieurement le long de la trajectoire des récipients 12 de manière à retenir le corps des récipients 12 dans la plage de mesure.

Dans le mode de réalisation représenté à la figure 2, le dispositif 11 de transfert est équipé de deux rails 42 qui sont agencés verticalement de part et d'autre de l'axe "C" du rayon "E" lumineux émis.

On décrit à présent le procédé de mesure de l'épaisseur "s" de la paroi 16 du récipient 12 qui met en oeuvre les moyens 30 de mesure décrits précédemment.

Ce procédé permet de réaliser une mesure instantanée de l'épaisseur "s" de la paroi 16 du récipient 12 sans ralentir le défilement du récipient 12 lorsqu'il traverse la zone 32 de mesure. La vitesse de déplacement des récipients 12 est négligeable par rapport à la vitesse de la lumière. Ainsi, les rayons "R1, R2" réfléchis sont orientés sensiblement sur le même axe "C" que le rayon "E" lumineux émis.

Une première étape d'émission du rayon "E" lumineux est déclenchée par l'unité électronique de contrôle 40 lors du passage du récipient 12 dans la zone 32 de mesure. Lors de cette étape, la source 34 lumineuse émet le rayon "E" lumineux de spectre continu perpendiculairement à la paroi 16 transparente du récipient 12.

En variante, le rayon "E" lumineux est émis en permanence. Seule la mesure par le capteur 38 interférométrique est déclenchée séquentiellement en fonction de la cadence de défilement des récipients 12.

Les deux rayons "R1, R2" réfléchis superposés sont alors orientés vers le capteur 38 interférométrique afin de déclencher la deuxième étape d'analyse spectrométrique. Au vu de la vitesse de propagation de la lumière, la première et la deuxième étape sont sensiblement mises en oeuvre de manière simultanée.

Lors de cette deuxième étape d'analyse spectrométrique les interférences produites par la superposition des premier et deuxième rayons "R1, R2" réfléchis sont analysées par le capteur 38 interférométrique.

Le premier rayon "R1" réfléchi et le deuxième rayon "R2" réfléchi présentent des spectres d'onde sensiblement identiques. Leur interférence produit un battement dont la mesure de la fréquence permet de calculer l'épaisseur "s" de la paroi 16 du récipient 12, notamment en fonction de l'indice de réfraction connu du matériau thermoplastique.

De manière connue, selon l'épaisseur traversée, l'intensité "I" de certaines longueurs d'onde de la superposition des rayons "R1, R2" sera réduite tandis que l'intensité "I" d'autres longueurs d'ondes de ladite superposition sera augmentée.

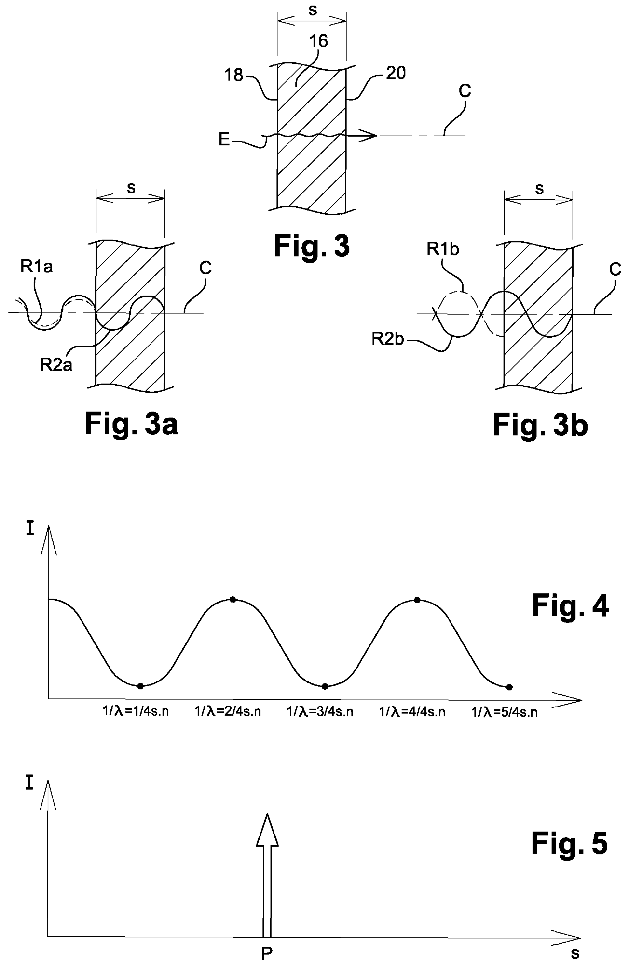

Ainsi, comme illustré à la figure 3a, les longueurs d'onde "λa" qui vérifient l'équation suivante, présentent notamment une intensité "I" maximale :

$$s \times n = \frac{\lambda a}{2} \times x$$

dans laquelle "s" représente l'épaisseur de la paroi 16, "n" représente l'indice de réfraction du matériau constituant la paroi 16 et "x" est un nombre entier quelconque.

En effet, les intensités "I" du premier rayon "R1a" réfléchi et du deuxième rayon "R2a" réfléchi s'additionnent pour augmenter l'intensité "I" du rayon pour ladite longueur d'onde "λa".

Comme illustré à la figure 3b, les longueurs d'onde "λb" qui vérifient l'équation suivante, présentent une intensité "I" minimale :

$$s \times n = \frac{\lambda b}{2} \times (x + 0{,}5)$$

dans laquelle "s" représente l'épaisseur de la paroi 16, "n" représente l'indice de réfraction du matériau constituant la paroi 16 et "x" est un nombre entier quelconque.

En effet, les intensités "I" du premier rayon "R1b" réfléchi et du deuxième rayon "R2b" réfléchi se soustraient pour diminuer l'intensité "I" du rayon pour ladite longueur d'onde "λb".

Les interférences se traduisent ainsi par un phénomène de battement. Le phénomène de battement est une variation périodique de l'intensité "I" lumineuse de la superposition des deux rayons "R1, R2" réfléchis en fonction de la fréquence "1/λ" de l'onde lumineuse, comme cela est illustré à la figure 4.

Par une transformée de Fourier, opération bien connue de l'homme du métier, il est aisé de retrouver la période "P" de cette variation périodique, comme représenté à la figure 5. Cette période "P" est proportionnelle à l'épaisseur optique qui est égale au produit de l'épaisseur "s" de la paroi 16 du récipient 12 par l'indice de réfraction "n" du matériau constituant ladite paroi 16. Il est ainsi possible de retrouver l'épaisseur "s" de la paroi 16 du récipient 12 en connaissant l'indice de réfraction "n" du matériau ou en étalonnant la mesure sur une paroi de test dont l'épaisseur a été mesurée par d'autres moyens connus.

Etant donné que le rayon "E" lumineux demeure à spectre continu, il est possible de bénéficier d'une plage de mesure très large. Seule l'intensité "I" et la diffusion des rayons "R1, R2" réfléchis est susceptible de limiter l'éloignement de la zone 32 de mesure par rapport au capteur 38 interférométrique.

Ce procédé de mesure permet ainsi de mesurer des récipients 12 de formes différentes grâce à sa large plage de mesure.

De plus, ce procédé permet de mesurer l'épaisseur de paroi de récipients réalisés en matériau thermoplastique transparent teint grâce à la plage de longueurs d'ondes sélectionnée pour l'émission du rayon "E" lumineux. On a en effet constaté

Le tableau ci-dessous représente l'influence de l'ajout d'un petit pourcentage de colorant dans le matériau thermoplastique est beaucoup plus importante sur l'intensité d'un rayon lumineux traversant la paroi d'un récipient réalisé avec ledit matériau. Pour réaliser ce tableau on a fait passer des rayons lumineux à travers des plaques de 2 mm d'épaisseur réalisée avec ledit matériau. On a ensuite mesurée l'intensité du rayon lumineux pour chacune des longueurs d'onde indiquées dans le tableau.

On constate par exemple que pour une paroi réalisée en "PET" teint de vert, seulement 3,6% de l'énergie lumineuse du spectre visible est transmise. Tandis qu'en proche infrarouge, on transmet 34 à 57% de l'énergie lumineuse.

Il en ressort que la plage infrarouge sélectionnée pour le procédé permet de mesurer l'épaisseur de parois réalisées aussi bien en matériau thermoplastique transparent incolore qu'en matériau thermoplastique transparent teint d'ambre, de vert ou de bleu.

| % transmission coloré / %transmission non coloré | | | |
|---|---|---|---|
| | Influence 0,3% colorant vert | Influence 0,25% colorant ambre | Influence 0,2% colorant bleu |
| bleu 445nm | 0,1% | 0,6% | 93,8% |
| vert 555 nm | 9,6% | 18,6% | 68,4% |
| rouge 600nm | 0,9% | 34,5% | 61,4% |
| moyenne(400-700nm) | **3,6%** | **21,3%** | **76,9%** |
| Proche Infrarouge | | | |
| 850 nm | 34,0% | 82,3% | 99,5% |
| 1300 nm | 52,9% | 88,0% | 99,3% |
| 1550 nm | **57,6%** | **89,9%** | **99,1%** |

## Revendications

1. Procédé de mesure de l'épaisseur (s) de la paroi (16) transparente d'un récipient (12) en matériau thermoplastique, le récipient (12) étant réalisé par soufflage d'une préforme chaude, tel que le procédé est un procédé de mesure d'épaisseur (s) par interférométrie qui comporte :

   - une première étape d'émission par une source (34) lumineuse d'un rayon (E) lumineux de spectre continu perpendiculairement à la paroi (16) transparente du récipient (12), le rayon (E) lumineux émis présentant un spectre continu de longueurs d'onde qui s'étendent sur une plage comprise entre 0,75 $\mu$m et 1,6 $\mu$m, c'est-à-dire dans le domaine de l'infrarouge, le rayon (E) émis étant réfléchi partiellement par la face (18) externe de la paroi (16) formant ainsi un premier rayon (R1) réfléchi à spectre continu, puis le rayon (E) transmis dans la paroi (16) étant réfléchi partiellement par la face (20) interne de la paroi (16) formant ainsi un deuxième rayon (R2) réfléchi à spectre continu ;
   - une deuxième étape d'analyse spectrométrique par un capteur (38) interférométrique des interférences produites par la superposition des premier et deuxième rayons (R1, R2) réfléchis, les interférences se traduisant par un phénomène de battement avec variation périodique de l'intensité (I) lumineuse en fonction de la fréquence (1/$\lambda$) de l'onde lumineuse, l'épaisseur (s) de la paroi (16) du récipient (12) étant susceptible d'être calculée en fonction de ladite période (P) de la variation et de l'indice de réfraction (n) du matériau.

**2.** Procédé selon la revendication précédente, tel que le rayon (E) lumineux émis présente un spectre continu de longueurs d'onde qui s'étendent sur une plage de 0,81 μm jusqu'à 0,89 μm.

**3.** Procédé selon la revendication 1, tel que le rayon (E) lumineux émis présente un spectre continu de longueurs d'onde qui s'étendent sur une plage de 1,25 μm jusqu'à 1,35 μm.

**4.** Procédé selon l'une quelconque des revendications précédentes, tel que le récipient transparent présente une paroi réalisée en un matériau transparent teint.

**5.** Procédé selon l'une quelconque des revendications précédentes, tel que les récipients (12) sont mobiles par rapport à la source (34) lumineuse et par rapport au capteur (38) interférométrique, perpendiculairement à l'axe (C) du rayon (E) émis, la mesure étant réalisée instantanément lors du passage du récipient (12) devant le capteur (38) interférométrique.

**6.** Procédé selon la revendication précédente, tel que les récipients (12) défilent devant le capteur (38) interférométrique à une vitesse qui est supérieure à 4 m/s.

**7.** Procédé selon l'une quelconque des revendications 5 ou 6, tel qu'au cours de la première étape :

- les récipients (12) sont portés par des moyens (24) de préhension du col (14) agencés en périphérie d'une roue (10) rotative autour d'un axe (A) vertical de transfert des récipients (12), le corps du récipient (12) étant susceptible d'être incliné vers l'extérieur sous l'effet de la force centrifuge ;
- la source (34) d'émission du rayon (E) lumineux et le capteur (38) interférométrique étant agencés radialement, par rapport à l'axe (A) de rotation de la roue (10), en vis-à-vis d'une zone (32) de mesure qui est interposée sur la trajectoire du récipient (12) ;
- le corps du récipient (12) est maintenu par au moins un rail (42) de maintien à l'encontre de la force centrifuge, le rail (42) étant est agencé radialement, par rapport à l'axe de rotation (A) de la roue (10), en vis-à-vis de la zone (32) de mesure.

**8.** Procédé selon l'une quelconque des revendications précédentes, tel qu'il est mis en oeuvre par une pluralité de capteurs (38) interférométriques et de sources (34) lumineuses associées de manière que l'épaisseur (s) de la paroi (16) du récipient (12) soit mesurée à différente hauteur.

**Patentansprüche**

**1.** Verfahren zur Messung der Dicke (s) der transparenten Wand (16) eines Behälters (12) aus thermoplastischem Material, wobei der Behälter (12) durch Blasen einer warmen Vorform hergestellt wird, derart, dass das Verfahren ein Verfahren einer Dickenmessung (s) durch Interferometrie ist, das aufweist:

- einen ersten Schritt des Emittierens durch eine Lichtquelle (34) eines Lichtstrahls (E) mit kontinuierlichem Spektrum lotrecht zur transparenten Wand (16) des Behälters (12), wobei der emittierte Lichtstrahl (E) ein kontinuierliches Spektrum von Wellenlängen aufweist, die sich über einen Bereich zwischen 0,75 μm und 1,6 μm erstrecken, d.h. im Bereich des Infrarotlichts, wobei der emittierte Strahl (E) teilweise von der Außenseite (18) der Wand (16) reflektiert wird, wodurch er einen ersten reflektierten Strahl (R1) mit kontinuierlichem Spektrum formt, dann der in die Wand (16) übertragene Strahl (E) teilweise von der Innenseite (20) der Wand (16) reflektiert wird, wodurch er einen zweiten reflektierten Strahl (R2) mit kontinuierlichem Spektrum formt;
- einen zweiten Schritt einer spektrometrischen Analyse durch einen interferometrischen Sensor (38) der von der Überlagerung der ersten und zweiten reflektierten Strahlen (R1, R2) erzeugten Interferenzen, wobei die Interferenzen sich durch ein Schwebungsphänomen mit periodischer Veränderung der Lichtstärke (I) abhängig von der Frequenz $(1/\lambda)$ der Lichtwelle äußern, wobei die Dicke (s) der Wand (16) des Behälters (12) abhängig von der Periode (P) der Veränderung und vom Brechungsindex (n) des Materials berechnet werden kann.

**2.** Verfahren nach dem vorhergehenden Anspruch, derart, dass der emittierte Lichtstrahl (E) ein kontinuierliches Spektrum von Wellenlängen aufweist, die sich über einen Bereich von 0,81 μm bis 0,89 μm erstrecken.

**3.** Verfahren nach Anspruch 1, derart, dass der emittierte Lichtstrahl (E) ein kontinuierliches Spektrum von Wellenlängen aufweist, die sich über einen Bereich von 1,25 μm bis 1,35 μm erstrecken.

**4.** Verfahren nach einem der vorhergehenden Ansprüche, derart, dass der transparente Behälter eine Wand aufweist, die aus einem getönten transparenten Material hergestellt ist.

**5.** Verfahren nach einem der vorhergehenden Ansprüche, derart, dass die Behälter (12) bezüglich der Lichtquelle (34) und bezüglich des interferometrischen Sensors (38) lotrecht zur Achse (C) des emittierten Strahls (E) beweglich sind, wobei die Messung augenblicklich beim Durchgang des Behälters (12) vor dem interferometrischen Sensor (38) durchgeführt wird.

**6.** Verfahren nach dem vorhergehenden Anspruch, derart, dass die Behälter (12) vor dem interferometrischen Sensor (38) mit einer Geschwindigkeit von mehr als 4 m/s vorbeilaufen.

**7.** Verfahren nach einem der Ansprüche 5 oder 6, derart, dass während des ersten Schritts:

- die Behälter (12) von Greifeinrichtungen (24) des Halses (14) getragen werden, die am Umfang eines um eine senkrechte Übertragungsachse (A) der Behälter (12) drehenden Rads (10) angeordnet sind, wobei der Körper des Behälters (12) unter der Wirkung der Zentrifugalkraft nach außen geneigt werden kann;
- die Emissionsquelle (34) des Lichtstrahls (E) und der interferometrische Sensor (38) radial bezüglich der Drehachse (A) des Rads (10) gegenüber einer Messzone (32) angeordnet sind, die auf der Wegstrecke des Behälters (12) zwischengefügt ist;
- der Körper des Behälters (12) von mindestens einer Schiene (42) zum Halt gegen die Zentrifugalkraft gehalten wird, wobei die Schiene (42) radial bezüglich der Drehachse (A) des Rads (10) gegenüber der Messzone (32) angeordnet ist.

**8.** Verfahren nach einem der vorhergehenden Ansprüche, derart, dass es von einer Vielzahl von interferometrischen Sensoren (38) und zugeordneten Lichtquellen (34) so durchgeführt wird, dass die Dicke (s) der Wand (16) des Behälters (12) auf verschiedenen Höhen gemessen wird.

**Claims**

**1.** Method for measuring the thickness (s) of the transparent wall (16) of a container (12) made of thermoplastic material, the container (12) being produced by blowing a hot preform, such that the method is a method for measuring thickness (s) by interferometry which comprises:

- a first step of emission, by a light source (34), of a light ray (E) of continuous spectrum at right angles to the transparent wall (16) of the container (12), the emitted light ray (E) exhibiting a continuous spectrum of wavelengths which extend over a range of between 0.75 μm and 1.6 μm, that is to say in the infrared range, the emitted ray (E) being partially reflected by the outer face (18) of the wall (16), thus forming a first reflected ray (R1) with continuous spectrum, then the ray (E) transmitted in the wall (16) being partially reflected by the inner face (20) of the wall (16) thus forming a second reflected ray (R2) with continuous spectrum;
- a second step of spectrometric analysis by an interferometric sensor (38) of the interferences produced by the superpositioning of the first and second reflected rays (R1, R2), the interferences resulting in a beat phenomenon with periodic variation of the light intensity (I) as a function of the frequency (1/λ) of the light wave, the thickness (s) of the wall (16) of the container (12) being able to be calculated as a function of said period (P) of the variation and of the refractive index (n) of the material.

**2.** Method according to the preceding claim, such that the emitted light ray (E) exhibits a continuous spectrum of wavelengths which extend over a range from 0.81 μm to 0.89 μm.

**3.** Method according to Claim 1, such that the emitted light ray (E) exhibits a continuous spectrum of wavelengths which extend over a range from 1.25 μm to 1.35 μm.

**4.** Method according to any one of the preceding claims, such that the transparent container has a wall in a coloured transparent material.

**5.** Method according to any one of the preceding claims, such that the containers (12) are mobile relative to the light source (34) and relative to the interferometric sensor (38), at right angles to the axis (C) of the emitted ray (E), the measurement being performed instantaneously upon the passage of the container (12) in front of the interferometric sensor (38).

6. Method according to the preceding claim, such that the containers (12) run in front of the interferometric sensor (38) at a speed greater than 4 m/s.

7. Method according to either one of Claims 5 and 6, such that, during the first step:

- the containers (12) are borne by means (24) for gripping the neck (14) arranged at the periphery of a wheel (10) that rotates about a vertical axis (A) for transferring the containers (12), the body of the container (12) being likely to be inclined outwards under the effect of the centrifugal force;
- the source (34) of emission of the light ray (E) and the interferometric sensor (38) being arranged radially, relative to the axis (A) of rotation of the wheel (10), facing a measurement zone (32) which is interposed on the trajectory of the container (12);
- the body of the container (12) is held by at least one holding rail (42) countering the centrifugal force, the rail (42) being arranged radially, relative to the axis of rotation (A) of the wheel (10), facing the measurement zone (32).

8. Method according to any one of the preceding claims, such that it is implemented by a plurality of interferometric sensors (38) and of light sources (34) associated in such a way that the thickness (s) of the wall (16) of the container (12) is measured at different heights.

Fig. 1

Fig. 2

s

16

18          20

E          C

## Fig. 3

s

R1a          C

R2a

## Fig. 3a

s

R1b          C

R2b

## Fig. 3b

I

## Fig. 4

$1/\lambda=1/4s.n$    $1/\lambda=2/4s.n$    $1/\lambda=3/4s.n$    $1/\lambda=4/4s.n$    $1/\lambda=5/4s.n$

I

## Fig. 5

P          s

## RÉFÉRENCES CITÉES DANS LA DESCRIPTION

**Documents brevets cités dans la description**

- DE 102007046387 A1
- FR 2898971
- WO 2009036715 A